# EUROPÄISCHE PATENTANMELDUNG

(11) **EP 2 072 843 A1**
(43) Veröffentlichungstag der Anmeldung: **24.06.2009**
(21) Anmeldenummer: 07123602.0
(22) Anmeldetag: 19.12.2007
(51) Int. Cl.: F16C 7/02

(54) **Pleuel**

(71) Anmelder: Georg Fischer Automotive AG, 8201 Schaffhausen (DE)
(72) Erfinder: Becker, Edgar, 40822, Mettmann (DE); Rieck, Torsten, 40878, Ratingen (DE); Schott, Steffen, 40822, Mettmann (DE); Güll, Andreas, 47167, Duisburg (DE); Brauner, Roman Franz, 78224, Singen (DE); Knobloch, Christian, 14482, Potsdam (DE)
(74) Vertreter: Weiss, Wolfgang

(57) **Zusammenfassung**

Es wird ein Pleuel (1) für Verbrennungsmotoren vorgeschlagen, umfassend ein erstes kleineres Pleuelauge (2) zur Verbindung des Pleuels (1) mit dem Kolbenzapfen des Verbrennungsmotors, ein zweites grösseres Pleuelauge (3) zur Verbindung des Pleuels (1) mit der Kurbelwelle des Verbrennungsmotors und eine Pleuelstange (4) zur festen Verbindung des ersten kleineren Pleuelauge (2) mit dem zweiten grösseren Pleuelauge (3), wobei die Pleuelstange (4) einen kreuzförmigen Querschnitt aufweist.

## Beschreibung

Die Erfindung bezieht sich auf einen Pleuel für Verbrennungsmotoren umfassend ein erstes kleineres Pleuelauge zur Verbindung des Pleuels mit dem Kolbenzapfen des Verbrennungsmotors, ein zweites grösseres Pleuelauge zur Verbindung des Pleuels mit der Kurbelwelle des Verbrennungsmotors und eine Pleuelstange zur festen Verbindung des ersten kleineren Pleuelauge mit dem zweiten grösseren Pleuelauge.

Im Kraftfahrzeugbau werden Pleuel verwendet um im Verbrennungsmotor die Hubbewegung des Kolbens auf die Drehbewegung der Kurbelwelle zu übertragen. Dabei führt der Pleuel eine oszillierende und schwenkende Bewegung aus. Diese Bewegungen führen zu Vibrationen, die auf die Kurbelwelle und auf das Fahrzeug übertragen werden. Um die Vibrationen zu beschränken sind Anordnungen bekannt, wobei Schwungräder eingesetzt werden, die in der entgegengesetzten Drehrichtung der Kurbelwelle drehen. Je grösser die zu bewegenden Massen sind, desto grösser sind auch die Trägheitsmomente. Grosse Massen im Kraftfahrzeug führen zu höherem Treibstoffverbrauch und grösseren Umweltverschmutzung.

Aus der DE 19812532 ist ein Pleuel für eine Brennkraftmaschine bekannt, wobei das grosse Pleuelauge aus einer schwereren Metalllegierung als der Rest des Pleuels hergestellt ist. Durch die Verlagerung des Schwerpunktes soll das Trägheitsmoment des Pleuels reduziert werden. Die Pleuelteile werden separat hergestellt und beispielsweise durch Reibschweissen mit einander verbunden.

Ausgehend von diesem Stand der Technik ist es Aufgabe der Erfindung, ein Pleuel anzugeben, der bei möglichst kleiner Masse ein möglichst kleines Trägheitsmoment aufweist.

Diese Aufgabe wird gelöst durch ein Pleuel für Verbrennungsmotoren umfassend ein erstes kleineres Pleuelauge zur Verbindung des Pleuels mit dem Kolbenzapfen des Verbrennungsmotors, ein zweites grösseres Pleuelauge zur Verbindung des Pleuels mit der Kurbelwelle des Verbrennungsmotors und eine Pleuelstange zur festen Verbindung des ersten kleineren Pleuelauge mit dem zweiten grösseren Pleuelauge, wobei die Pleuelstange einen kreuzförmigen Querschnitt aufweist.

Bevorzugte Weiterbildungen der Erfindung ergeben sich aus den abhängigen Ansprüchen.

Es ist von Vorteil, dass der Pleuel bei gleichen Festigkeitsanforderungen ein geringeres und konstanteres Gewicht als die bisherigen Pleuel aufweist. Es ist auch von Vorteil, dass der Pleuel im Bereich der Pleuelaugen geringere und konstantere Wandstärken als die bisherigen Pleuel aufweist. Dies wird dadurch erreicht, dass der Pleuel eine Formteilungsnaht aufweist, die senkrecht zu den Umfängen der Pleuelaugen verlaufend angeordnet ist.

Es ist auch von Vorteil, dass mit gleich grossen Formkästen mehr Pleuel hergestellt werden können. Dies wird dadurch erreicht, dass die Pleuel stehend statt liegend im Formkasten gegossen werden.

Ein Ausführungsbeispiel der Erfindung wird anhand der Figuren beschrieben. Es zeigen:
Figur 1 einen Schnitt durch einen Formkasten mit einem erfindungsgemässen Pleuel,
Figur 2 eine weitere perspektivische Sicht auf den Pleuel aus Figur 1,
Figur 3 einen Schnitt durch den Pleuel entlang der Linie A-A aus Figur 1,
Figur 4 eine Sicht auf den Formkasten mit drei Pleuel gemäss Figur 1,
Figur 5 eine Sicht auf den Formkasten mit zwei Pleuel gemäss dem Stand der Technik und
Figur 6 eine weitere Sicht auf den Pleuel aus Figur 5.

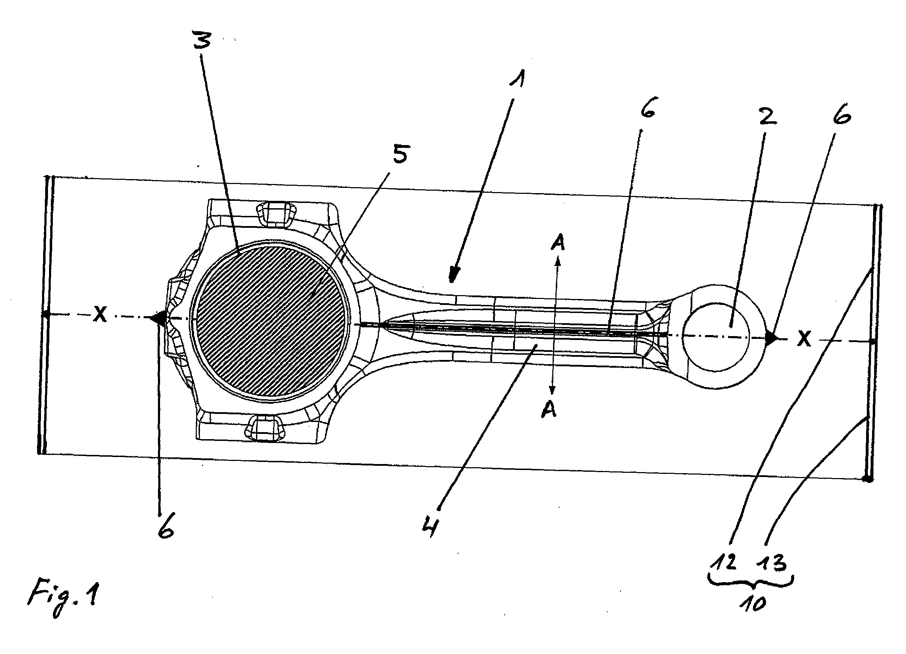

In Figur 1 ist ein Pleuel 1 mit Sicht auf die Achsen der Pleuelaugen 2,3 in einem Formkasten 10 dargestellt. Der Gussformkasten 10 besteht aus einer oberen Formkastenhälfte 12 und einer unteren Formkastenhälfte 13. Der Pleuel 1 besteht aus einer Pleuelstange 4, die einstückig mit dem ersten kleineren Pleuelauge 2 und dem zweiten grösseren Pleuelauge 3 gegossen wird. Das erste kleinere Pleuelauge 2 dient zur Verbindung des Pleuels 1 mit dem Kolben des Verbrennungsmotors. Das zweite grössere Pleuelauge 3 dient zur Verbindung des Pleuels 1 mit der Kurbelwelle. Die Figur 1 zeigt den Pleuel 1, wie er nach dem Giessvorgang in einem Formkasten 10, gesehen von der Umrandung des Formkastens liegend angeordnet ist. Mit einer Linie X-X ist die Trennungsebene zwischen der oberen und der unteren Formkastenhälfte 12,13 angedeutet. In Figur 1 ist auch ersichtlich, wie die Pleuelaugen 2,3 mit einem Kern 5 hergestellt wird, wobei die Mittellinie des Kernes 5 in der Trennungsebene X-X des Formkastens 10 liegt.

Die Lage des Pleuels 1 im Formkasten 10 kann am fertigen Gussformteil anhand einer Formteilungsphase oder Formteilungsnaht 6 festgestellt werden. Am Pleuel aus Figur 1 ist ersichtlich, wie die Formteilungsnaht 6 am Pleuel 1 senkrecht zu den Umfängen der Pleuelaugen 2,3 verlaufend angeordnet ist. Die Formteilungsnaht 6 wird in der Trennungsebene X-X des Formkastens gebildet und zeigt auf, in welcher Giesslage der Pleuel gegossen wurde.

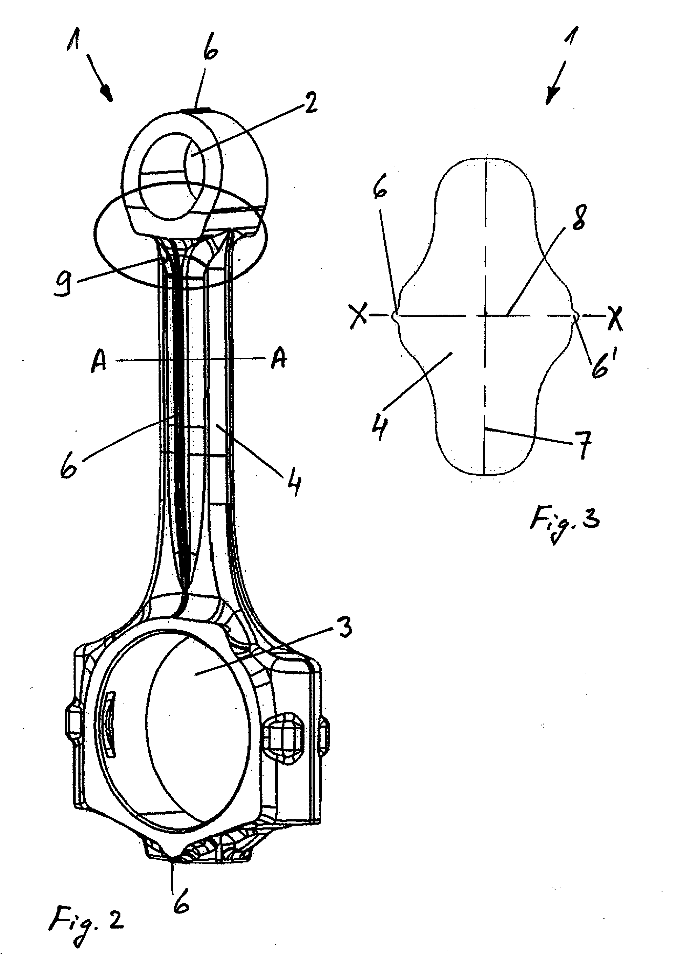

In Figur 2 ist der Pleuel von Figur 1 perspektivisch dargestellt. In Figur 3 ist die Pleuelstange 4 entlang der Linie A-A zwischen den zwei Pleuelaugen 2,3 aus Figur 1 geschnitten dargestellt. Die Pleuelstange 4 weist einen kreuzförmigen Querschnitt auf, wobei der längere Arm 7 des Kreuzes senkrecht zur Trennungsebene X-X verlaufend angeordnet ist. Der kürzere Arm 8 des Kreuzes ist in der Trennungsebene X-X verlaufend angeordnet und erstreckt sich von der linken Formtrennungsnaht 6 zur rechten Formtrennungsnaht 6'.

Durch die neue Form der Pleuelstange 4 wird die Gesamtmasse des Pleuels 1 bei gleich bleibender Festigkeit reduziert. Die Masse die bei der Bewegung des Pleuels 1 bewegt werden muss, wird kleiner. Durch das optimierte Verhältnis zwischen den Flächenträgheitsmomenten in der Schwenkrichtung des Pleuels 1 und der Längsrichtung des Kolbens werden die Vibrationen auf ein Minimum reduziert. Der Übergangsbereich 9 zwischen dem kleineren Pleuelauge 2 und der Pleuelstange 4 wird mit grösseren Radien als bisher ausgebildet. Hierdurch bewirkt die neue Form der Pleuelstange 1 bei Druckbeanspruchung eine geringere Flächenpressung im kleineren Pleuelauge 2 und eine geringere Kerbwirkung.

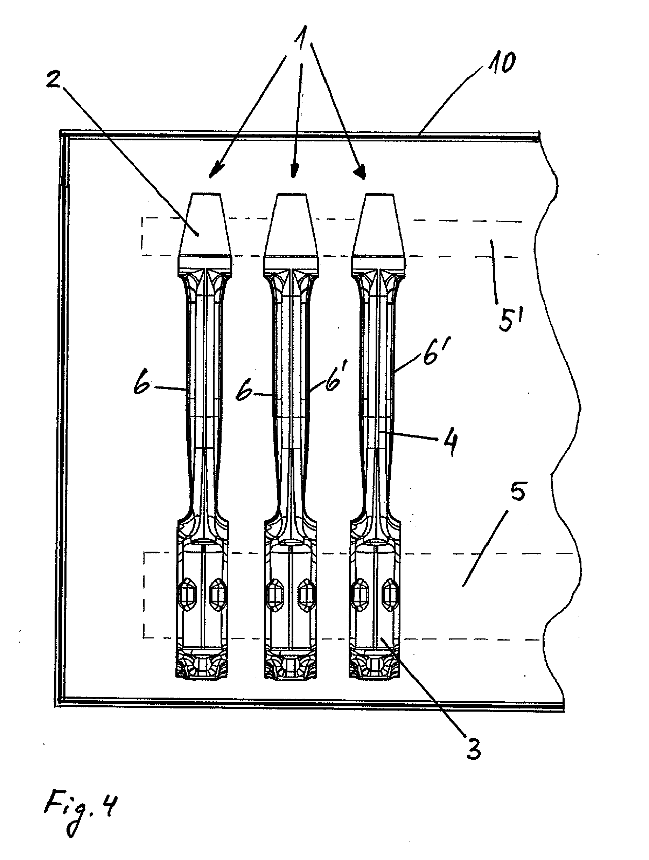

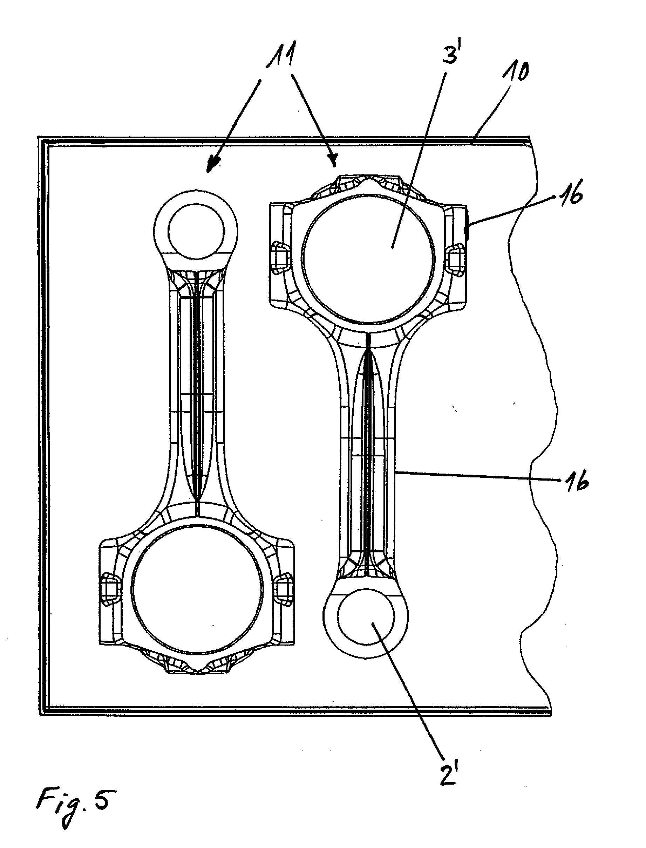

In Figur 4 ist eine teilweise Sicht auf einer Hälfte des Formkastens 10 mit drei Pleuel 1 gemäss der Erfindung dargestellt. In Figur 5 ist im Vergleich zur Figur 4 der gleiche Formkasten 10 mit zwei Pleuel 11 gemäss dem bisherigen Stand der Technik dargestellt. Weil der Pleuel 1 in einer um 90° gedrehten Lage im Formkasten 10 gegossen wird, können wesentlich mehr Pleuel 1 im selben Formkasten 10 hergestellt werden. Die Formtrennungsnaht 6 verläuft bei dem neuen Pleuel 1 ebenso in einer um 90° gedrehten Ebene. Die Pleuelaugen 2,3 aller neben einander liegenden Pleuel 1 können mit einem Kern 5, 5' hergestellt werden. Der Kern 5 im grossen Pleuelauge 3 ist zylindrisch statt konisch ausgebildet. Hierdurch wird die Rundheit des Pleuelauges 3 verbessert und durch den gleichmässigeren Wärmeübergang bei der Erstarrung werden geringere Eigenspannungen im Pleuelauge erreicht.

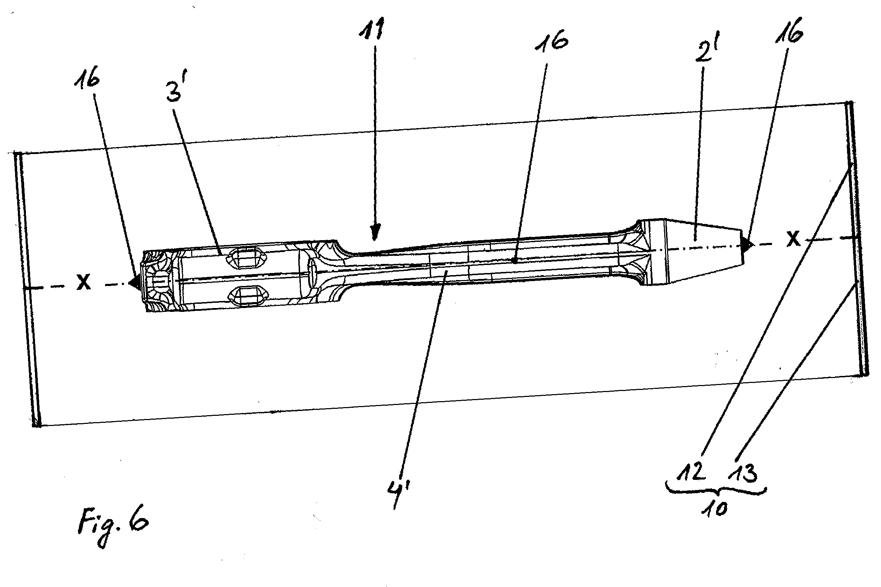

In Figur 6 ist zum Vergleich mit der Figur 1 der Pleuel 11 gemäss dem Stand der Technik dargestellt. Die Formtrennungsnaht 16 verläuft am Umfang der beiden Pleuelaugen 2', 3' und ist wesentlich länger als die Formtrennungsnaht 16 beim Pleuel 1 aus Figur 1. Hierdurch wird der Aufwand für die Nachbearbeitung des Pleuels 1 erheblich gesenkt. Die Wandstärken im Bereich der Pleuelaugen 2, 3 können dünner und gleichmässiger hergestellt werden.

## Patentansprüche

1. Pleuel (1) für Verbrennungsmotoren umfassend ein erstes kleineres Pleuelauge (2) zur Verbindung des Pleuels (1) mit dem Kolbenzapfen des Verbrennungsmotors, ein zweites grösseres Pleuelauge (3) zur Verbindung des Pleuels (1) mit der Kurbelwelle des Verbrennungsmotors und eine Pleuelstange (4) zur festen Verbindung des ersten kleineren Pleuelauge (2) mit dem zweiten grösseren Pleuelauge (3), **dadurch gekennzeichnet, dass** die Pleuelstange (4) einen kreuzförmigen Querschnitt aufweist.

2. Pleuel (1) nach dem Anspruch 1, **dadurch gekennzeichnet, dass** der Pleuel (1) eine Formteilungsnaht (6) senkrecht zu den Umfängen der Pleuelaugen (2,3) verlaufend aufweist, wobei die Formteilungsnaht (6) in der Trennungsebene X-X zwischen den Formkastenhälften (12,13) des Gussformkastens (10) ausgebildet ist.

3. Pleuel (1) nach mindestens einem der Ansprüche 1 oder 2, **dadurch gekennzeichnet, dass** die Pleuelstange (4) im Querschnitt einen längere Arm (7) des Kreuzes senkrecht zur Trennungsebene X-X und einen kürzeren Arm (8) des Kreuzes in der Trennungsebene X-X verlaufend angeordnet ist.

4. Pleuel (1) nach mindestens einem der Ansprüche 1 bis 3, **dadurch gekennzeichnet, dass** zwischen dem kleineren Pleuelauge (2) und der Pleuelstange (4) einen Übergangsbereich (9) mit grösseren Radien als bisher ausgebildet ist.

5. Pleuel (1) nach mindestens einem der Ansprüche 1 bis 4, **dadurch gekennzeichnet, dass** die Pleuelaugen (2,3) unmittelbar nach dem Giessprozess zylindrisch ausgebildet sind, wobei mehrere Pleuelaugen (2,3) hinter einander von einem einzigen zylindrischen Kern (5) durchzogen im Formkasten (10) angeordnet sind.
